(19) **Europäisches Patentamt / European Patent Office / Office européen des brevets**

(11) **EP 3 759 685 B1**

(12) **EUROPEAN PATENT SPECIFICATION**

(45) Date of publication and mention
of the grant of the patent:
**01.05.2024 Bulletin 2024/18**

(21) Application number: **19710957.2**

(22) Date of filing: **01.03.2019**

(51) International Patent Classification (IPC):
**G06T 7/11** *(2017.01)* **G06T 7/174** *(2017.01)*

(52) Cooperative Patent Classification (CPC):
**G06T 7/11; G06T 7/174;** G06T 2207/20081;
G06T 2207/20084; G06T 2207/20128;
G06T 2207/30081

(86) International application number:
**PCT/US2019/020262**

(87) International publication number:
**WO 2019/169251 (06.09.2019 Gazette 2019/36)**

(54) **SYSTEM AND METHOD FOR AN ACCELERATED CLINICAL WORKFLOW**

SYSTEM UND VERFAHREN FÜR EINEN BESCHLEUNIGTEN KLINISCHEN ARBEITSABLAUF

SYSTÈME ET PROCÉDÉ POUR UN FLUX OPÉRATIONNEL CLINIQUE ACCÉLÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2018 IN 201841007888**

(43) Date of publication of application:
**06.01.2021 Bulletin 2021/01**

(73) Proprietor: **General Electric Company
Schenectady, NY 12345 (US)**

(72) Inventors:
- **SHANBHAG, Dattesh Dayanand
Bangalore 560066 (IN)**
- **MULLICK, Rakesh
Bangalore 560066 (IN)**
- **SHRIRAM, Krishna Seetharam
Bangalore 560066 (IN)**
- **KAUSHIK, Sandeep Suryanarayana
Bangalore 560066 (IN)**
- **SREEKUMARI, Arathi
Bangalore 560066 (IN)**

(74) Representative: **Kilburn & Strode LLP
Lacon London
84 Theobalds Road
Holborn
London WC1X 8NL (GB)**

(56) References cited:
**WO-A1-2018/015414    US-A1- 2017 164 911
US-B2- 9 767 380**

**Description**

BACKGROUND

Embodiments of the present specification relate generally to clinical workflow, and more particularly relate to systems and methods for an accelerated radiology workflow using deep learning.

Medical imaging data is increasingly being used for diagnosis and treatment of health conditions such as, but not limited to, cancer conditions and artery diseases. Imaging techniques such as computed tomography (CT) and magnetic resonance imaging (MRI) generate large volumes of medical images having valuable diagnostic information. Acquiring medical image data associated with an anatomical region in a patient may require repeated imaging. Further, these images need to be analyzed by medical professionals to derive any useful diagnostic information. Also, the investigation of the images is a laborious and timeconsuming process.

Automatic segmentation and analysis of medical image volumes is a promising and valuable tool for medical professionals in providing effective treatment plans for the patients. Machine learning techniques are frequently used to recommend automatic segmentation and analysis of medical image volumes. However, conventional machine learning techniques require clinically relevant information to be extracted from the medical image data. Conventionally, the clinically relevant information is manually generated by medical professionals. The need for user intervention to generate training data sets invariably brings in subjectivity and quality issues.

Recently, deep learning techniques are being increasingly used in processing the image data in various medical applications. These deep learning techniques have been used for machine learning tasks that are directed to extremely complex systems in terms of nonlinearity modelling and computational requirements. Image segmentation and parcellation of the segmented images may be desirable to identify pathology or 'at-risk' areas and derive therapeutic decisions or guide surgical intervention. Moreover, in many cases, the quantification requires intensive computation effort and may need to be performed offline. The burden of image analysis and determining a medical status is on the medical professionals.

US 9767380 B2 describes an apparatus and method for determining an image similarity based on image features. The image similarity determination may be based on an image comparison tool. The image comparison tool may be trained, by a machine-learning system, to estimate a similarity between images based on a subset of image data comprised by image features. The estimate may be an estimate of how similar structures found in the images would be following a geometric transformation of some of the structures. An atlas image for performing automatic segmentation of an image may be determined according to a comparison made using the image comparison tool.

WO 2018/015414 A1 describes methods and systems for artificial intelligence based medical image segmentation. In a method for autonomous artificial intelligence based medical image segmentation, a medical image of a patient is received. A current segmentation context is automatically determined based on the medical image and at least one segmentation algorithm is automatically selected from a plurality of segmentation algorithms based on the current segmentation context. A target anatomical structure is segmented in the medical image using the selected at least one segmentation algorithm.

US 2017/0164911 A1 describes a system and method for image generation in a combined examination using multiple imaging modalities. A described example relates to a method for producing and processing scout imaging data with a hybrid imaging device, which is able to perform and prepare emission tomography as a first imaging modality. A hybrid imaging device is also described. Hybrid imaging devices of this kind are, for example as combined PET-MR system or combined PET-CT system or combined SPECT-CT system or combined SPECT-MR system.

BRIEF DESCRIPTION

In accordance with one aspect of the present specification, a computer implemented method is disclosed, as defined in claim 1.

In accordance with another aspect of the present specification, an imaging system is disclosed, as defined in claim 8.

Various exemplary arrangements and implementations are described to aid understanding. The scope of protection is defined by the claims.

DRAWINGS

These and other features and aspects of embodiments of the present invention will become better understood when the following detailed description is read with reference to the accompanying drawings in which like characters represent like parts throughout the drawings, wherein:

FIG. 1 is a diagrammatic illustration of an imaging system configured to provide an accelerated clinical workflow, in accordance with aspects of the present specification;

FIG. 2 is a schematic illustrating a clinical workflow for a deep learning based selection of an atlas image for segmenting an anatomical image using the imaging system of FIG. 1, in accordance with aspects of the present specification;

FIGs. 3A-3D are mask images corresponding to an anatomical region of interest in a subject, in accordance with aspects of the present specification;

FIGs. 4A-4D are images illustrating effectiveness of a deep learning based selection of an atlas image for parcellation of anatomical images, in accordance with aspects of the present specification; and

FIG. 5 is a flow chart of a method for imaging configured to provide an accelerated clinical workflow, in accordance with aspects of the present specification.

DETAILED DESCRIPTION

As will be described in detail hereinafter, systems and methods for an accelerated clinical workflow are presented. More particularly, systems and methods for an accelerated radiology workflow using deep learning are presented.
As will be appreciated, 'radiology' is a science that employs X-ray imaging to examine and record medical conditions within the body of a subject such as a patient. Some non-limiting examples of medical techniques used in radiology include X-ray radiography, ultrasound, computed tomography (CT), positron emission tomography (PET), magnetic resonance imaging (MRI), and the like. The term 'anatomical image' refers to a two-dimensional image representative of an anatomical region in the patient such as, but not limited to, heart, brain, kidney, prostate, and lungs. Moreover, the terms 'segmented image,' 'parcellated image,' and 'sub-parcellated image' are used herein to refer to an anatomical image where parts and/or sub-regions of the anatomy have been delineated possibly with boundary markings and/or color coding with the help of landmarks. The term 'atlas' or 'atlas image' is used herein to refer to a reference segmented image corresponding to a specific anatomy with known medical conditions. The atlas image referred herein generally includes a plurality of labels representative of sub-regions of the region of interest in the anatomical image data. Also, the terms 'mask' or 'mask image' are used to refer to an anatomical image with boundary markings on a portion of the image to represent localization information and/or orientation information. The localization information is representative of a position, size, and/or boundary information with a fixed or a relative reference within the image. The orientation information is representative of an inclination and/or a direction of a portion of the image. The terms 'medical status' or 'medical condition' are used to refer to a disease condition, progression of the disease, and other related attributes corresponding to the anatomical region. The term 'medical recommendation' is used to refer to an advice or recommendation regarding a treatment plan or therapy or additional examinations generated based on the medical condition.

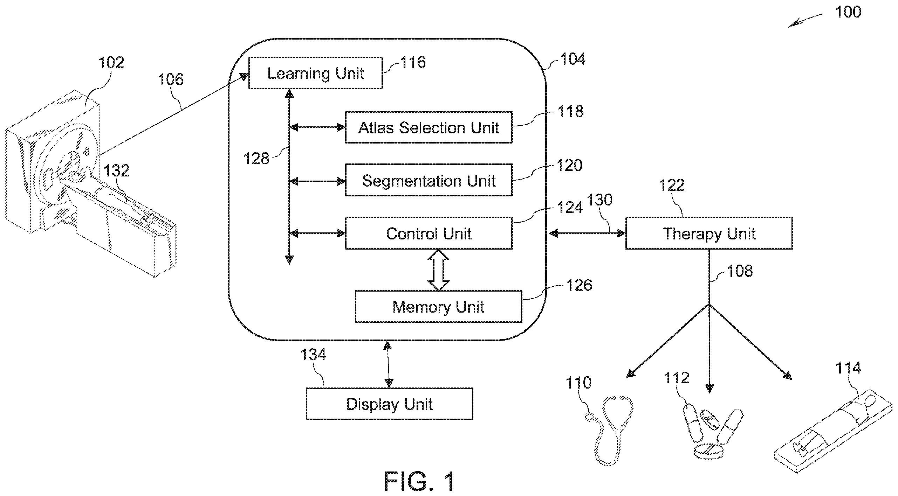

FIG. 1 is a diagrammatic illustration of an imaging system 100 for an accelerated clinical workflow, in accordance with aspects of the present specification. The imaging system 100 includes an image data acquisition subsystem 102 configured to acquire anatomical image data 106 corresponding to an anatomical region of interest (ROI) in a subject such as a patient 132. The image data acquisition subsystem 102 includes, but is not limited to, a magnetic resonance imaging (MRI) system, a computed tomography (CT) imaging system, and a positron emission tomography (PET) imaging system. The anatomical image data 106 may include a plurality of anatomical images. In one example, the anatomical images may be representative of an anatomical ROI such as the brain of a subject such as a patient 132. In another example, the anatomical images may be representative of the spinal region of the patient 132. In yet another embodiment, the anatomical images may correspond to the prostate region as anatomical region of interest in the patient 132.
The imaging system 100 further includes an image processing subsystem 104 communicatively coupled to the image data acquisition subsystem 102 and configured to generate a parcellated segmented image 130 to be used in a variety of medical activities such as, but not limited to, diagnosis of a medical condition, a therapy delivery, surgery planning, and report generation. In a presently contemplated configuration, the image processing subsystem 104 includes a learning unit 116, an atlas selection unit 118, a segmentation unit 120, a control unit 124, and a memory unit 126 communicatively coupled to each other through a communications bus 128.
In one embodiment, the control unit 124 includes at least one of a general-purpose computer, a GPU, a digital signal processor, and a controller. In other embodiments, the control unit 124 includes a customized processor element such as, but not limited to, an application-specific integrated circuit (ASIC) and a field-programmable gate array (FPGA). In some embodiments, the control unit 124 may perform one or more functions of at least one of the learning unit 116, the atlas selection unit 118, the segmentation unit 120. The control unit 124 may include more than one processor co-operatively working with each other for performing intended functionalities. The control unit 124 is further configured to store (retrieve) contents into (from) the memory unit 126. In one embodiment, the control unit 124 is configured to initiate and control the functionality of one or more of the learning unit 116, the atlas selection unit 118, the segmentation unit 120.

In some embodiments, the control unit 124 may be communicatively coupled with an input device such as a keyboard, a mouse, and any other input device. Further, the control unit 124 is configured to receive commands and/or parameters from an operator via an input device. It may be noted that the functionality of the control unit 124 may be tailored/customized based on the function performed. By way of example, when the control unit 124 is configured to aid the functioning of the learning unit 116, the control unit 124 is programmed to supervise generation of a plurality of deep learning models corresponding to a plurality of medical conditions based on historical anatomical data. Similarly, when, the control unit 124 is configured to aid the functioning of the atlas selection unit 118, the control unit 124 is programmed to supervise generation of a plurality of similarity values corresponding to a plurality of atlas images. In a similar manner, when the control unit 124 is used to aid the segmentation unit 120, the control unit 124 is configured to supervise registration of two images.

In one embodiment, the memory unit 126 is a random-access memory (RAM), read only memory (ROM), flash memory, or any other type of computer readable memory accessible by at least one of the learning unit 116, the atlas selection unit 118, the segmentation unit 120. Also, in certain embodiments, the memory unit 126 may be a non-transitory computer readable medium encoded with a program having a plurality of instructions to instruct at least one of the learning unit 116, the atlas selection unit 118, the segmentation unit 120 to perform a sequence of steps to generate the parcellated segmented image 130. Specifically, the program may instruct the learning unit 116 to generate localization information, the atlas selection unit 118 to select an atlas image, and/or the segmentation unit 120 to perform image registration to generate the parcellated segmented image 130. The memory unit 126 is configured to store the acquired anatomical image data 106. In one embodiment, the memory unit 126 is configured to store a plurality of medical records corresponding to a plurality of patients indexed by multiple labels. The memory unit 126 is configured to store one or more medical databases having a plurality of medical records annotated with multiple labels.

The imaging system 100 also includes a therapy unit 122 communicatively coupled to the image processing subsystem 104 and configured to generate a medical recommendation 108 corresponding to one or more medical activities. The therapy unit 122 is configured to receive the parcellated segmented image 130 from the image processing subsystem 104 and process the received parcellated segmented image 130 to generate the medical recommendation 108. In one embodiment, the medical recommendation 108 may include a diagnosis 110 of a medical condition. In another embodiment, the medical recommendation 108 may suggest a therapy delivery 112 activity. In another embodiment, the medical recommendation 108 may suggest a biopsy 114. The medical recommendation 108 may also include generation of reports based on the segmented image 130. The reports may be generated by the therapy unit 122.

The image data acquisition subsystem 102 is configured to acquire the anatomical image data 106 corresponding to an anatomical ROI in the patient 132. The anatomical image data 106 includes a scout dataset. The scout dataset refers to a low resolution anatomical image dataset that can be acquired relatively quickly with minimal radiation exposure to the patient 132. The anatomical image data 106 may include a plurality of anatomical images in the form of two-dimensional (2D) image data, three-dimensional (3D) image data, or four-dimensional (4D) image data. The 2D image data includes a plurality of 2D images, where each image has a plurality of pixels arranged in a plane. Also, the 3D image data includes a plurality of 3D images, where each 3D image has a plurality of voxels arranged in a volume. In one embodiment, the 3D data may be a collection of 2D images. The 4D data may include a plurality of 3D images or a plurality of 2D images. In general, each pixel (or voxel) is represented as a vector value, which in turn represents image properties such as, but not limited to, grey values, color values, and opacity values. The image data acquisition subsystem 102 may be further configured to store the acquired anatomical image data 106 in the memory unit 126. In one embodiment, the acquired anatomical image data 106 may be provided in real-time to the image processing subsystem 104.

The image processing subsystem 104 is configured to process the anatomical image data 106 to determine localization information corresponding to the anatomical ROI. The image processing subsystem 104 is also configured to generate orientation information corresponding the anatomical ROI. In one embodiment, the localization information may be generated using machine learning techniques or image segmentation techniques. Further, the image processing subsystem 104 is configured to select an atlas image based on the localization information. The selected atlas image is registered with the anatomical image data 106 to generate a parcellated segmented image 130.

The learning unit 116 is configured to receive the anatomical image data 106 from the image data acquisition subsystem 102. As previously noted, the anatomical image data 106 includes the scout dataset and the plurality of anatomical images corresponding to the anatomical region of interest (ROI) of the patient 132. The learning unit 116 is configured to process an anatomical image from the plurality of anatomical images in the anatomical image data 106 to determine localization information corresponding to the anatomical region of interest being imaged. As previously noted, the localization information is representative of a position, size, and/or boundary information with a fixed or a relative reference within the image. In one embodiment, the learning unit 116 is configured to process the scout dataset to determine the localization information. In certain scenarios, the localization information may also include orientation information corresponding to the anatomical region of interest. As previously noted, the orientation information is representative of an inclination and/or direction of a portion of the image.

The localization information may be generated using an image segmentation technique or a machine learning technique. Specifically, the learning unit 116 is configured to generate the localization information by processing the anatomical image using a deep learning model. In this embodiment, the deep learning model may generate a boundary image based on the anatomical image. In this example, the deep learning model may be trained offline to generate the boundary image. Further, the learning unit 116 is configured to select a mask image based on a comparison of the boundary image with a plurality of mask images stored in the memory unit 126.

In an example useful for understanding the present disclosure which is not encompassed by the literal wording of the claims, the learning unit 116 is configured to process the anatomical image using a deep learning model and generate a multi-label index value by classifying the anatomical image in multiple ways. For example, the anatomical image may have three labels corresponding to gender, age, and disease type. A corresponding index value may be a vector having three elements with the first element representing gender, the second element representing age, and the third element representing disease type. In this example, the deep learning model may be trained off-line to perform classification of the anatomical image based on a plurality of training images.

The learning unit 116 is further configured to select a mask image from the memory unit 126, where the mask image is representative of the localization information based on the multi-label index value. In this example, the deep learning model is a multi-label classifier that has been designed *a priori* using historical anatomical image data for a specific anatomical region of interest. By way of example, the deep learning model may be trained to generate a multi-label index value representative of a prostate mask image. In another example, the deep learning model may be trained to generate a multi-label index value representative of a brain mask image. In yet another final example which is not encompassed by the literal wording of the claims, the deep learning model may be trained to generate a multi-label index value representative of spinal mask image. In other embodiments, the learning unit 116 may be configured to employ a deep learning model designed to select a mask image from a plurality of stored mask images.

The learning unit 116 is further configured to train a deep learning model in an off-line mode based on the historical anatomical image data. In general, the learning unit 116 is configured to generate a plurality of deep learning models corresponding to a plurality of medical conditions based on a historical medical database. The plurality of deep learning models corresponds to a plurality of medical imaging techniques, a plurality of organs of interest, and a plurality of medical conditions. In one embodiment, the plurality of deep learning models is stored in the memory unit 126 and retrieved by the control unit 124 for evaluating the anatomical image data 106.

The deep learning models include, but are not limited to, neural network models, convolutional neural network (CNN) models, and recursive neural network models. The CNN may include a plurality of convolution stages and each convolution stage may include a convolution layer, an activation layer, and a pooling layer that are operatively coupled in a cascading manner. Each of the convolution layer, the activation layer, and the pooling layer in turn includes a corresponding plurality of layer parameters. The number of convolution stages and the number of layer parameters may be selected to enable configuration of the CNN to process the anatomical image data 106.

The historical medical database is an annotated medical database having multiple labels corresponding to each medical record. The multiple labels are also used to index medical images including atlas images. The atlas images correspond to specific organs of interest, anatomical regions of interest, medical status of the organ of interest, medical recommendation corresponding to the medical status, or combinations thereof. The multiple labels may be representative of age and gender of a subject, a disease type, region of dwelling of the subject, progression of disease, type of organ of interest, and image acquisition type. It may be noted that the multiple label list is not exhaustive and may include other such factors as well.

The atlas selection unit 118 is communicatively coupled to the learning unit 116 and configured to select an atlas image from a plurality of atlas images based on the mask image. In one embodiment, each of the plurality of atlas images includes an atlas mask image and a corresponding atlas anatomical image. The atlas anatomical image is a previously segmented anatomical image having a plurality of labels representative of a plurality of sub regions in the image. In one embodiment, the atlas selection unit 118 is configured to compare the mask image selected by the learning unit 116 with a plurality of atlas mask images using a shape based metric to generate a plurality of similarity values. In one embodiment, a Dice similarity coefficient (DSC) is used as the shape based metric for comparing the mask image with each of the plurality of atlas mask images. Specifically, the mask image is registered with each of the plurality of atlas mask images. Subsequently, a DSC value between the mask image and each of the registered atlas mask images is computed to generate the plurality of similarity values. An atlas image corresponding to the maximum similarity value among the plurality of similarity values is selected as a matching atlas image. In other embodiments, other metrics such as, but not limited to, a cross correlation value or a mutual information value may be used to generate the plurality of similarity values.

The segmentation unit 120 is communicatively coupled to the atlas selection unit 118 and configured to segment an image in the anatomical image data 106 based on the atlas image to generate a parcellated segmented image corresponding to the anatomical region of interest. In one embodiment, the segmentation unit 120 is configured to register the atlas anatomical image with the image selected from the acquired anatomical image data 106. In another embodiment, the segmentation unit 120 is configured to jointly register the atlas mask image and the atlas anatomical image corresponding to the selected atlas image with the selected image. Further, the segmentation unit 120 is configured to transfer one or more labels from the atlas anatomical image to the selected image to generate the parcellated segmented image 130. In one embodiment, the transferring of a label from the atlas anatomical image to the selected image includes superimposing the label on to the selected image.

The therapy unit 122 is configured to recommend a medical activity based on the parcellated segmented image 130. The medical activity includes at least one of guiding image acquisition, supervising a treatment plan, assisting therapeutic delivery to the patient 132, and generating a medical report. Further, the therapy unit 122 is configured to determine a medical status of the anatomical region of interest based on a comparison of the parcellated segmented image 130 with a plurality of stored images having known medical status. The therapy unit 122 is also configured to identify the medical recommendation based on the medical status. In one embodiment, the therapy unit 122 is also configured to recommend at least one of a biopsy, a radiation therapy, and a stem therapy based on the localization information corresponding to the anatomical region of interest. In one embodiment, the recommendation may be generated based on matching the localization information with historical images and retrieving information regarding successful medical treatments in medical cases that correspond to the matched historical images. In one embodiment, the therapy unit 122 is configured to present the medical status in the form of a cardiac imaging bull's eye plot, a prostate imaging reporting and data system (PiRADS), a liver imaging reporting and data system (LiRADS), and the like. It may be noted that use of deep learning techniques to select image masks and use of atlas based image segmentation as described hereinabove aid in reducing manual intervention and accelerating the clinical workflow in radiological procedures.

Additionally, one or more of the cardiac imaging bull's eye plot, the PiRADS, and the LiRADS may be visualized on a display unit 134 to aid in assessing medical status of the heart, the prostate, and the liver.

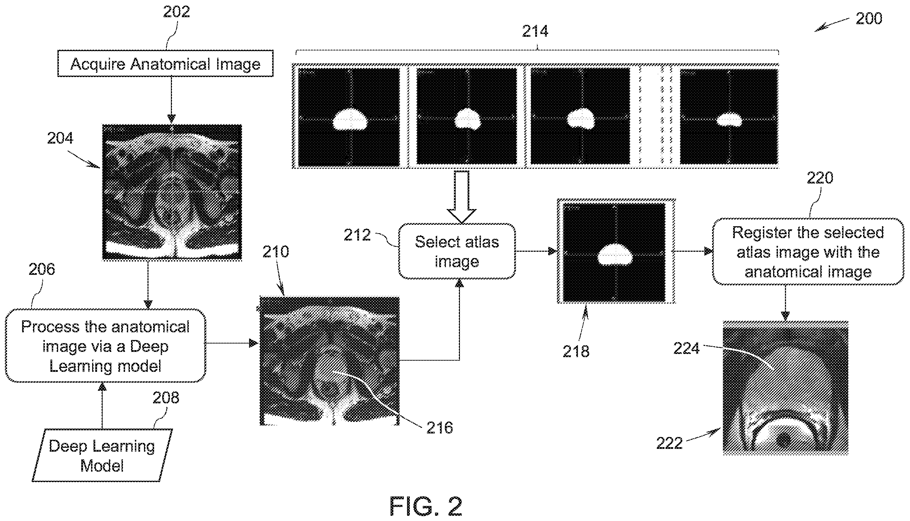

FIG. 2 is a schematic illustrating a clinical workflow 200, in accordance with aspects of the present specification. In particular, the clinical workflow 200 is representative of a deep learning based selection of an atlas image for segmenting an anatomical image using the imaging system of FIG. 1. The method 200 may be described with reference to the components of FIG. 1.

The clinical workflow 200 includes obtaining an acquired anatomical image 204, as indicated by step 202. The anatomical image 204 is selected from anatomical image data 106 of FIG. 1. Further, at step 206, the acquired anatomical image 204 is processed by the learning unit 116 using a deep learning model 208 to generate a mask image 210. The mask image 210 is representative of localization information of an anatomical region of interest in the anatomical image 204. In the example of FIG. 2, the mask image 210 is representative of a prostate region 216 in the anatomical image 204.

Moreover, at step 212, an atlas image 218 is selected from a plurality of atlas images 214 based on the mask image 210. Subsequently, the selected atlas image 218 is registered with the anatomical image 204, as indicated by step 220, to generate a parcellated segmented image 222. The parcellated segmented image 222 includes a label 224. As previously noted, the label 224 may be representative of an internal zone or a peripheral zone of the prostate region. Use of the deep learning model 208 to generate the mask image 210 by processing the anatomical image 204 aids in reducing the time taken to generate the mask image 210, thereby resulting in an accelerated clinical workflow 200.

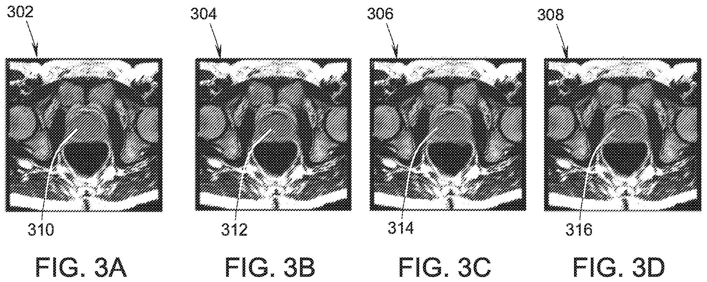

FIGs. 3A-3D are mask images corresponding to an anatomical region of interest in a subject such as the patient 132 of FIG. 1, in accordance with aspects of the present specification. In particular, FIG. 3A illustrates a ground truth mask image 302 of the prostate region 310 in the patient 132. FIG. 3B is a mask image 304 obtained by processing an anatomical image via use of a conventional deep learning model trained to determine the prostate region. The localization information corresponding to the prostate region in the image 304 is represented by numeral 312. In this embodiment, no atlas image is used.

Also, FIG. 3C illustrates a mask image 306 obtained from a conventional atlas image corresponding to the prostate region. In this embodiment, only the atlas image is used for determining the localization information. Further, in the image 306, the localization information corresponding to the prostate region is represented by reference numeral 314. FIG. 3D is a mask image 308 obtained using the system 100, where an atlas image is selected by a deep learning model and the selected atlas image is registered via a non-rigid registration with the anatomical image. In the example of FIG. 3D, localization information 316 corresponds to the prostate region.

Furthermore, Dice similarity coefficient (DSC) values are computed by comparing the ground truth image 302 of FIG. 3A with the mask images 304, 306, and 308 of FIG. 3B, FIG. 3C, and FIG. 3D. One example of the DSC is defined using equation (1).

$$DSC = \frac{2TP}{2TP + FP + FN}$$

(1)

where TP is a true positive value, FP is a false positive value, and FN is a false negative value in a given segmented image with reference to the ground truth image 302.

The DSC values for each image 304, 306, and 308 are computed based on equation (1). In one example, the DSC value corresponding to the image 304 of FIG. 3B is 0.82, while the DSC value corresponding to the image 306 of FIG. 3C is 0.79. Similarly, the DSC value corresponding to the image 308 of FIG. 3D is 0.84. It may be observed that the mask image 308 of FIG. 3D obtained via use of the non-rigid registration technique provides a better DSC value compared to the DSC values corresponding to the segmented images 304, 306 obtained via use of the deep learning based segmentation technique and the atlas based segmentation technique.

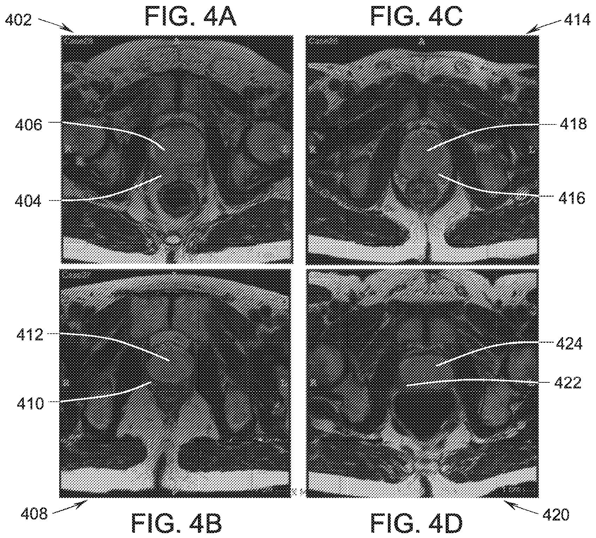

FIGs. 4A-4D are images illustrating effectiveness of a deep learning based selection of an atlas image for parcellation of anatomical images, in accordance with aspects of the present specification. FIG. 4A illustrates a first segmented image 402 corresponding to a first patient. In FIG. 4A, the first segmented image 402 includes a first peripheral zone 404 and a first interior zone 406 of the prostate region. Similarly, FIG. 4B illustrates a second segmented image 408 corresponding to a second patient. The second segmented image 408 includes a second peripheral zone 410 and a second interior zone 412 of the prostate region. Further, FIG. 4C illustrates a third segmented image 414 corresponding to a third patient. The third segmented image 414 includes a third peripheral zone 416 and a third interior zone 418 of the prostate region. Moreover, FIG. 4D illustrates a fourth segmented image 420 corresponding to a fourth patient. The fourth segmented image 420 includes a fourth peripheral zone 422 and a fourth interior zone 424 of the prostate region.

FIGs. 4A-4D illustrate variations in size and shape of the interior zones 406, 412, 418, 424 in the parcellated anatomical images 402, 408, 424, 420 corresponding to different patients. It may be noted that the system 100 which entails a deep learning based selection of an atlas image is configured to efficiently identify or parcellate the correct size and shape of a region of interest from images corresponding to the different patients. More particularly, use of the system 100 is configured to be agnostic to the variations in the size and/or shape of regions of interest in images corresponding to different patients, thereby facilitating the efficient parcellation of the regions of interest from images corresponding to the different patients.

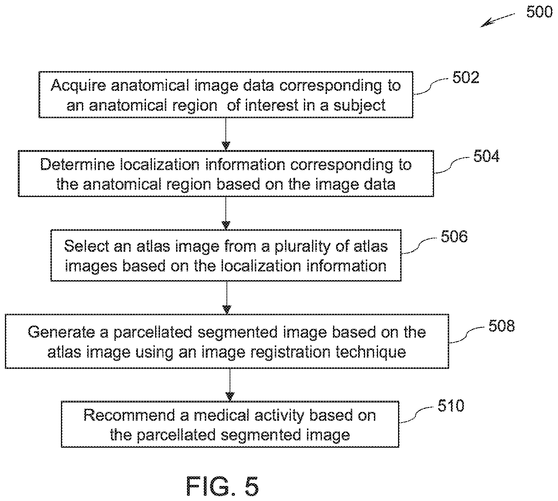

FIG. 5 is a flow chart of a method 500 for an accelerated clinical workflow, in accordance with aspects of the present specification. The method 500 is described with reference to the components of FIG. 1. The method 500 includes acquiring anatomical image data 106 corresponding to an anatomical region of interest in the subject 132, as indicated by step 502. The anatomical image data 106 includes a plurality of anatomical images. Also, the anatomical image data 106 is acquired via use of the image data acquisition subsystem 102. In one embodiment, acquiring the anatomical image data also includes receiving, from the image data acquisition subsystem 102, a scout dataset corresponding to the subject 132, where the scout dataset corresponds to low resolution anatomical image data.

Further, the method 500 includes determining localization information corresponding to the anatomical region of interest based on the anatomical image data 106 using a deep learning based technique, as depicted by step 504. In one embodiment, determining the localization information includes processing the scout dataset to generate boundary information and orientation information corresponding to the anatomical region of interest using a deep learning model. Specifically, the deep learning model generates a boundary image based on an image in the scout dataset. In this embodiment, the deep learning model is trained in an offline mode to determine a boundary image based on historical anatomical image data. The boundary image includes localization information and orientation information. A mask image in a plurality of mask images is selected by comparing the boundary image with the plurality of mask images.

In an example useful for understanding the present disclosure which is not encompassed by the literal wording of the claims, determining the localization information includes processing an anatomical image from the anatomical image data 106 using a deep learning model to generate a multi-label index value. Additionally, a mask image is selected based on the multi-label index value. In this last example which is not encompassed by the literal wording of the claims, a deep learning model may be trained to determine a multi-label index value based on the historical anatomical image data. Specifically, the deep learning model is trained using datasets corresponding to desired localization information extracted from the historical anatomical image data. In one embodiment, the localization information is a mask image. Moreover, in a one embodiment, the deep learning model is selected from plurality of deep learning models corresponding to a plurality of medical conditions. The plurality of deep learning models may be generated off-line using the historical anatomical image data. Furthermore, the plurality of deep learning models corresponding to the plurality of medical conditions is generated based on a historical medical database. The historical medical database is annotated with labels representative of age, gender, region, progression of medical condition, type of disease among other things.

Additionally, at step 506, an atlas image is selected from a plurality of atlas images corresponding to the anatomical region of interest based on the localization information. As noted previously, the localization information is represented by the mask image based on the multi-label index value. In one embodiment, selecting the atlas image includes comparing the mask image with a plurality of atlas image masks using a shape based metric to generate a plurality of similarity values. Further, a matching atlas image is selected among the plurality of atlas images based on the plurality of similarity values. The matching atlas image includes a plurality of labels representative of a sub-region of the region of interest in the anatomical image data 106.

Moreover, at step 508, a parcellated segmented image is generated based on the atlas image using an image registration technique. In one embodiment, the selected atlas image is registered with an anatomical image from the anatomical image data 106 to generate a registered anatomical image. Further, one or more labels from the plurality of labels corresponding to the selected atlas image is transferred to the registered anatomical image to generate the parcellated segmented image.

The method 500 also includes recommending a medical activity based on the parcellated segmented image, as indicated by step 510. The medical activity includes at least one of guiding image acquisition, supervising a treatment plan, assisting therapeutic delivery to the subject, and generating a medical report. In one embodiment, a medical status of the anatomical region of interest is determined based on the parcellated segmented image. Further, a medical recommendation is generated based on the medical status. The medical activity may include at least one of a biopsy, a radiation therapy, and a stem therapy based on the region of interest information. In one embodiment, the medical activity may include presenting the medical status in a medical report. Specifically, the medical report may include at least one of a cardiac imaging bull's eye plot or prostate imaging, reporting and data system (PiRADS) and liver imaging reporting and data system (Li-RADS). In one embodiment, the parcellated segmented image may be displayed on the display unit 134 with recommendations in the form of at least one of a text, a symbol, or a color code. Further, one or more parcellated regions may be highlighted or colored in the display to draw the attention of a clinician.

The systems and methods presented hereinabove provide improved radiology clinical workflows using deep learning techniques. Image processing time is reduced consequent to the ability of the deep learning technique to select an atlas mask image based on the anatomical image being analyzed. Acquisition accuracy is enhanced by combining the deep learning model based image segmentation with atlas based parcellation. Use of the systems and methods enables reduction of time taken for reporting and/or guiding surgical or radiation treatments. Additionally, use of the deep learning model based image segmentation with atlas based parcellation aids in automating the clinical workflow, where any results are presented on the display unit in real-time by integrating the deep learning based mask selection with atlas based image segmentation.

Moreover, use of the present systems and methods enable clinical decision making by localizing or segmenting one or more anatomical regions and parcellating the anatomical structures. Image acquisition may be accelerated and/or scanning parameters may be optimized with the help of localization information corresponding to the anatomical region of interest obtained via use of deep learning models. An accurately segmented anatomical image aids in planning and guiding tissue biopsy or radiation treatment. Further, statistical measures generated based on the segmented anatomical structures are useful in generating clinical conclusions such as prostate cancer staging. Automated parcellation of anatomical structures helps in presenting the acquired images rapidly on the display unit. The segmentation of anatomical images is robust to artifacts and accurate in the presence of pathologies. The segmentation technique entails use of a subset training dataset and is able to include newer sub-regions without increasing the computation complexity.

It is to be understood that not necessarily all such objects or advantages described above may be achieved in accordance with any particular embodiment. Thus, for example, those skilled in the art will recognize that the systems and techniques described herein may be embodied or carried out in a manner that achieves or improves one advantage or group of advantages as taught herein without necessarily achieving other objects or advantages as may be taught or suggested herein.

While the technology has been described in detail in connection with only a limited number of embodiments, it should be readily understood that the specification is not limited to such disclosed embodiments. Rather, the technology can be modified to incorporate any number of variations, alterations, substitutions or equivalent arrangements not heretofore described, but which are commensurate with the scope of the claims. Additionally, while various embodiments of the technology have been described, it is to be understood that aspects of the specification may include only some of the described embodiments. Accordingly, the specification is not to be seen as limited by the foregoing description, but is only limited by the scope of the appended claims.

## Claims

1. A computer implemented method, comprising:

acquiring (502) anatomical image data corresponding to an anatomical region of interest in a subject, wherein acquiring the anatomical image data comprises receiving, from an image data acquisition subsystem (102), a scout dataset corresponding to the subject, and wherein the scout dataset corresponds to low resolution anatomical image data;

determining (504) localization information corresponding to the anatomical region of interest based on the anatomical image data using a learning based technique, wherein determining the localization information comprises:

processing the scout dataset to generate a boundary image corresponding to the anatomical region of interest; and

selecting a mask image from a plurality of mask images based on a comparison of the boundary image with each of the plurality of mask images (304, 306, 308);

selecting (506) an atlas image from a plurality of atlas images corresponding to the anatomical region of interest based on the localization information;

generating (508) a parcellated segmented image based on the atlas image; and

recommending (510) a medical activity based on the parcellated segmented image, wherein the medical activity comprises at least one of guiding image acquisition, supervising a treatment plan, assisting therapeutic delivery to the subject, and generating a medical report.

2. The computer implemented method of claim 1, wherein selecting the atlas image (506) comprises:

comparing the mask image (304, 306, 308) with a plurality of atlas images using a shape based metric to generate a plurality of similarity values; and

selecting a matching atlas image from the plurality of atlas images based on the plurality of similarity values, wherein the matching atlas image comprises a plurality of labels.

3. The computer implemented method of claim 2, wherein generating (508) the parcellated segmented image comprises:

registering the selected matching atlas image with the anatomical image to generate a registered anatomical image; and

transferring one or more labels of the plurality of labels from the selected matching atlas image to the registered anatomical image to generate the parcellated segmented image.

4. The computer implemented method of claim 1, wherein recommending (510) the medical activity comprises: determining a medical status of the anatomical region of interest based on the parcellated segmented image; and generating a medical recommendation based on the medical status.

5. The computer implemented method of claim 4, wherein the medical activity comprises at least one of a biopsy, a radiation therapy, and a stem therapy.

6. The computer implemented method of claim 1, wherein determining the localization information further comprises generating a plurality of deep learning models corresponding to a plurality of medical conditions based on historical anatomical data.

7. The computer implemented method of claim 1, further comprising generating a plurality of deep learning models corresponding to a plurality of medical conditions based on historical anatomical data.

8. An imaging system (100), comprising:

an image data acquisition subsystem (102) configured to:

acquire anatomical image data (106) corresponding to an anatomical region of interest in a subject;

receive a scout dataset corresponding to the subject, wherein the scout dataset corresponds to low resolution anatomical image data;

process the scout dataset to generate a boundary image corresponding to the anatomical region of interest; and

select a mask image from a plurality of mask images based on a comparison of the boundary image with each of the plurality of mask images;

a learning unit (116) communicatively coupled to the image data acquisition subsystem and configured to determine localization information corresponding to the anatomical region of interest based on the anatomical image data using a learning based technique;
an atlas selection unit (118) communicatively coupled to the learning unit and configured to select an atlas image (218) from a plurality of atlas images corresponding to the anatomical region of interest based on the localization information;
a segmentation unit (120) communicatively coupled to the atlas selection unit and configured to segment the anatomical image data based on the atlas image to generate a parcellated segmented image; and
a therapy unit (122) communicatively coupled to the segmentation unit and configured to recommend a medical activity based on the parcellated segmented image, wherein the medical activity comprises at least one of guiding image acquisition, supervising a treatment plan, assisting therapeutic delivery to the subject, and generating a medical report.

9. The imaging system of claim 8, wherein the atlas selection unit (118) is configured to:

compare the mask image with a plurality of atlas images using a shape based metric to generate a plurality of similarity values; and
select a matching atlas image from the plurality of atlas images based on the plurality of similarity values, wherein the matching atlas image comprises a plurality of labels.

10. The imaging system of claim 9, wherein the segmentation unit (120)is configured to:
register the selected matching atlas image with the anatomical image to generate a registered anatomical image; and
transfer one or more labels of the plurality of labels from the selected matching atlas image to the registered anatomical image to generate a parcellated segmented image.


**Patentansprüche**

1. Computerimplementiertes Verfahren, umfassend:

Erfassen (502) von Daten eines anatomischen Bilds entsprechend einem anatomischen Bereich von Interesse eines Patienten, wobei das Erfassen der Daten eines anatomischen Bilds ein Empfangen, von einem Bilddatenerfassungssubsystem (102), eines Scout-Datensatzes entsprechend dem Patienten umfasst und wobei der Scout-Datensatz Daten eines anatomischen Bilds mit niedriger Auflösung entspricht;
Bestimmen (504) von Lokalisierungsinformationen entsprechend dem anatomischen Bereich von Interesse basierend auf den anatomischen Bilddaten unter Verwendung einer lernbasierten Technik, wobei das Bestimmen der Lokalisierungsinformationen umfasst:

Verarbeiten des Scout-Datensatzes zum Erzeugen eines Grenzbilds entsprechend dem anatomischen Bereich von Interesse und
Auswählen eines Maskenbilds aus einer Vielzahl von Maskenbildern basierend auf einem Vergleich des Grenzbilds mit jedem der Vielzahl von Maskenbildern (304, 306, 308);
Auswählen (506) eines Atlasbilds aus einer Vielzahl von Atlasbildern entsprechend dem anatomischen Bereich von Interesse basierend auf den Lokalisierungsinformationen; Erzeugen (508) eines parzellierten segmentierten Bilds basierend auf dem Atlasbild und
Empfehlen (510) einer medizinischen Aktivität basierend auf dem parzellierten segmentierten Bild, wobei die medizinische Aktivität mindestens eines von einem Lenken der Bilderfassung, Überwachen eines Behandlungsplans, Unterstützen einer therapeutischen Verabreichung an den Patienten und Erzeugen eines medizinischen Berichts umfasst.

2. Computerimplementiertes Verfahren nach Anspruch 1, wobei das Auswählen des Atlasbilds (506) umfasst:

Vergleichen des Maskenbilds (304, 306, 308) mit einer Vielzahl von Atlasbildern unter Verwendung einer formbasierten Metrik zum Erzeugen einer Vielzahl von Ähnlichkeitswerten und
Auswählen eines übereinstimmenden Atlasbilds aus der Vielzahl von Atlasbildern basierend auf der Vielzahl von Ähnlichkeitswerten, wobei das übereinstimmende Atlasbild eine Vielzahl von Labeln umfasst.

**3.** Computerimplementiertes Verfahren nach Anspruch 2, wobei das Erzeugen (508) des parzellierten segmentierten Bilds umfasst:

Registrieren des ausgewählten übereinstimmenden Atlasbilds mit dem anatomischen Bild zum Erzeugen eines registrierten anatomischen Bilds und
Übertragen eines oder mehrerer Label der Vielzahl von Labeln aus dem ausgewählten übereinstimmenden Atlasbild an das registrierte anatomische Bild zum Erzeugen des parzellierten segmentierten Bilds.

**4.** Computerimplementiertes Verfahren nach Anspruch 1, wobei das Empfehlen (510) der medizinischen Aktivität umfasst: Bestimmen eines medizinischen Zustands des anatomischen Bereichs von Interesse basierend auf dem parzellierten segmentierten Bild und Erzeugen einer medizinischen Empfehlung basierend auf dem medizinischen Zustand.

**5.** Computerimplementiertes Verfahren nach Anspruch 4, wobei die medizinische Aktivität mindestens eines von einer Biopsie, einer Strahlentherapie und einer Stammtherapie umfasst.

**6.** Computerimplementiertes Verfahren nach Anspruch 1, wobei das Bestimmen der Lokalisierungsinformationen ferner ein Erzeugen einer Vielzahl von Modellen für tiefes Lernen entsprechend einer Vielzahl von Erkrankungen basierend auf historischen anatomischen Daten umfasst.

**7.** Computerimplementiertes Verfahren nach Anspruch 1, ferner umfassend ein Erzeugen einer Vielzahl von Modellen für tiefes Lernen entsprechend einer Vielzahl von Erkrankungen basierend auf historischen anatomischen Daten.

**8.** Bildgebungssystem (100), umfassend:
ein Bilddatenerfassungssubsystem (102), das ausgelegt ist zum:

Erfassen von anatomischen Bilddaten (106) entsprechend einem anatomischen Bereich von Interesse eines Patienten; Empfangen eines Scout-Datensatzes entsprechend dem Patienten, wobei der Scout-Datensatz Daten eines anatomischen Bilds mit niedriger Auflösung entspricht;
Verarbeiten des Scout-Datensatzes zum Erzeugen eines Grenzbilds entsprechend dem anatomischen Bereich von Interesse und
Auswählen eines Maskenbilds aus einer Vielzahl von Maskenbildern basierend auf einem Vergleich des Grenzbilds mit jedem der Vielzahl von Maskenbildern;
eine Lerneinheit (116), die kommunikativ an das Bilddatenerfassungssubsystem gekoppelt und zum Bestimmen von Lokalisierungsinformationen entsprechend dem anatomischen Bereich von Interesse basierend auf den anatomischen Bilddaten unter Verwendung einer lernbasierten Technik ausgelegt ist;
eine Atlasauswahleinheit (118), die kommunikativ an die Lerneinheit gekoppelt und zum Auswählen eines Atlasbilds (218) aus einer Vielzahl von Atlasbildern entsprechend dem anatomischen Bereich von Interesse basierend auf den Lokalisierungsinformationen ausgelegt ist;
eine Segmentierungseinheit (120), die kommunikativ an die Atlasauswahleinheit gekoppelt und zum Segmentieren der anatomischen Bilddaten basierend auf dem Atlasbild zum Erzeugen eines parzellierten segmentierten Bilds ausgelegt ist; und
eine Therapieeinheit (122), die kommunikativ an die Segmentierungseinheit gekoppelt und zum Empfehlen einer medizinischen Aktivität basierend auf dem parzellierten segmentierten Bild, wobei die medizinische Aktivität mindestens eines von einem Lenken der Bilderfassung, Überwachen eines Behandlungsplans, Unterstützen einer therapeutischen Verabreichung an den Patienten und Erzeugen eines medizinischen Berichts umfasst, ausgelegt ist.

**9.** Bildgebungssystem nach Anspruch 8, wobei die Atlasauswahleinheit (118) ausgelegt ist zum:

Vergleichen des Maskenbilds mit einer Vielzahl von Atlasbildern unter Verwendung einer formbasierten Metrik zum Erzeugen einer Vielzahl von Ähnlichkeitswerten und
Auswählen eines übereinstimmenden Atlasbilds aus der Vielzahl von Atlasbildern basierend auf der Vielzahl von Ähnlichkeitswerten, wobei das übereinstimmende Atlasbild eine Vielzahl von Labeln umfasst.

**10.** Bildgebungssystem nach Anspruch 9, wobei die Segmentierungseinheit (120) ausgelegt ist zum:

Registrieren des ausgewählten übereinstimmenden Atlasbilds mit dem anatomischen Bild zum Erzeugen eines registrierten anatomischen Bilds und

Übertragen eines oder mehrerer Label der Vielzahl von Labeln aus dem ausgewählten übereinstimmenden Atlasbild an das registrierte anatomische Bild zum Erzeugen eines parzellierten segmentierten Bilds.

**Revendications**

1. Procédé mis en oeuvre par ordinateur, comprenant :

l'acquisition (502) de données d'image anatomique correspondant à une région anatomique d'intérêt chez un sujet, l'acquisition des données d'image anatomique comprenant la réception, depuis un sous-système d'acquisition de données d'image (102), d'un ensemble de données de topogramme correspondant au sujet, l'ensemble de données de topogramme correspondant à des données d'image anatomique basse résolution ;

la détermination (504) d'informations de localisation correspondant à la région anatomique d'intérêt sur la base des données d'image anatomique à l'aide d'une technique basée sur l'apprentissage, la détermination des informations de localisation comprenant :

le traitement de l'ensemble de données de topogramme pour générer une image de délimitation correspondant à la région anatomique d'intérêt ; et

la sélection d'une image de masque parmi une pluralité d'images de masque sur la base d'une comparaison de l'image de délimitation à chacune de la pluralité d'images de masque (304, 306, 308) ;

la sélection (506) d'une image d'atlas parmi une pluralité d'images d'atlas correspondant à la région anatomique d'intérêt sur la base des informations de localisation ;

la génération (508) d'une image segmentée parcellisée sur la base de l'image d'atlas ; et

la recommandation (510) d'une activité médicale sur la base de l'image segmentée parcellisée, l'activité médicale comprenant le guidage de l'acquisition d'images et/ou la supervision d'un programme de traitement et/ou l'aide à l'administration thérapeutique au sujet et/ou la génération d'un rapport médical.

2. Procédé mis en oeuvre par ordinateur selon la revendication 1, la sélection de l'image d'atlas (506) comprenant :

la comparaison de l'image de masque (304, 306, 308) à une pluralité d'images d'atlas à l'aide d'une métrique basée sur la forme pour générer une pluralité de valeurs de similarité ; et

la sélection d'une image d'atlas concordante parmi la pluralité d'images d'atlas sur la base de la pluralité de valeurs de similarité, l'image d'atlas concordante comprenant une pluralité d'étiquettes.

3. Procédé mis en oeuvre par ordinateur selon la revendication 2, la génération (508) de l'image segmentée parcellisée comprenant :

le calage de l'image d'atlas concordante sélectionnée sur l'image anatomique pour générer une image anatomique calée ; et

le transfert d'une ou de plusieurs étiquettes parmi la pluralité d'étiquettes depuis l'image d'atlas concordante sélectionnée vers l'image anatomique calée pour générer l'image segmentée parcellisée.

4. Procédé mis en oeuvre par ordinateur selon la revendication 1, la recommandation (510) de l'activité médicale comprenant : la détermination d'un état médical de la région anatomique d'intérêt sur la base de l'image segmentée parcellisée ; et la génération d'une recommandation médicale sur la base de l'état médical.

5. Procédé mis en oeuvre par ordinateur selon la revendication 4, l'activité médicale comprenant une biopsie et/ou une radiothérapie et/ou une thérapie par cellules souches.

6. Procédé mis en oeuvre par ordinateur selon la revendication 1, la détermination des informations de localisation comprenant la génération d'une pluralité de modèles d'apprentissage profond correspondant à une pluralité de troubles médicaux sur la base de données anatomiques historiques.

7. Procédé mis en oeuvre par ordinateur selon la revendication 1, comprenant en outre la génération d'une pluralité de modèles d'apprentissage profond correspondant à une pluralité de troubles médicaux sur la base de données anatomiques historiques.

8. Système d'imagerie (100), comprenant :
un sous-système d'acquisition de données d'image (102) configuré pour :

acquérir des données d'image anatomique (106) correspondant à une région anatomique d'intérêt chez un sujet ;
recevoir un ensemble de données de topogramme correspondant au sujet, l'ensemble de données de topogramme correspondant à des données d'image anatomique basse résolution ;
traiter l'ensemble de données de topogramme pour générer une image de délimitation correspondant à la région anatomique d'intérêt ; et
sélectionner une image de masque parmi une pluralité d'images de masque sur la base d'une comparaison de l'image de délimitation à chacune de la pluralité d'images de masque ;
une unité d'apprentissage (116) couplée de façon communicante au sous-système d'acquisition de données d'image et configurée pour déterminer des informations de localisation correspondant à la région anatomique d'intérêt sur la base des données d'image anatomique à l'aide d'une technique basée sur l'apprentissage ;
une unité de sélection d'atlas (118) couplée de manière communicante à l'unité d'apprentissage et configurée pour sélectionner une image d'atlas (218) parmi une pluralité d'images d'atlas correspondant à la région anatomique d'intérêt sur la base des informations de localisation ;
une unité de segmentation (120) couplée de manière communicante à l'unité de sélection d'atlas et configurée pour segmenter les données d'image anatomique sur la base de l'image d'atlas pour générer une image segmentée parcellisée ;
une unité de thérapie (122) couplée de manière communicante à l'unité de segmentation et configurée pour recommander une activité médicale sur la base de l'image segmentée parcellisée, l'activité médicale comprenant le guidage de l'acquisition d'images et/ou la supervision d'un programme de traitement et/ou l'aide à l'administration thérapeutique au sujet et/ou la génération d'un rapport médical.

9. Système d'imagerie selon la revendication 8, l'unité de sélection d'atlas (118) étant configurée pour :

comparer l'image de masque à une pluralité d'images d'atlas à l'aide d'une métrique basée sur la forme pour générer une pluralité de valeurs de similarité ; et
sélectionner une image d'atlas concordante parmi la pluralité d'images d'atlas sur la base de la pluralité de valeurs de similarité, l'image d'atlas concordante comprenant une pluralité d'étiquettes.

10. Système d'imagerie selon la revendication 9, l'unité de segmentation (120) étant configurée pour :

caler l'image d'atlas concordante sélectionnée sur l'image anatomique pour générer une image anatomique calée ; et
transférer une ou plusieurs étiquettes parmi la pluralité d'étiquettes depuis l'image d'atlas concordante sélectionnée vers l'image anatomique calée pour générer une image segmentée parcellisée.

FIG. 1

EP 3 759 685 B1

FIG. 2

EP 3 759 685 B1

302

304

306

308

310

312

314

316

FIG. 3A    FIG. 3B    FIG. 3C    FIG. 3D

EP 3 759 685 B1

FIG. 4C

FIG. 4A

FIG. 4D

FIG. 4B

EP 3 759 685 B1

500

Acquire anatomical image data corresponding to
an anatomical region  of interest in a subject — 502

Determine localization information corresponding to
the anatomical region based on the image data — 504

Select an atlas image from a plurality of atlas
images based on the localization information — 506

Generate a parcellated segmented image based on the
atlas image using an image registration technique — 508

Recommend a medical activity based on
the parcellated segmented image — 510

FIG. 5

**EP 3 759 685 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9767380 B2
- WO 2018015414 A1
- US 20170164911 A1